# FASCICULE DE BREVET EUROPEEN

(11) **EP 4 265 957 B1**
(45) Date de publication et mention de la délivrance du brevet: **16.10.2024**
(21) Numéro de dépôt: 23166460.8
(22) Date de dépôt: 04.04.2023
(51) Int. Cl.: F17C 3/00

(54) **INSTALLATION DE STOCKAGE DE FLUIDE CRYOGÉNIQUE**
KRYOGENE FLUIDSPEICHERANLAGE
CRYOGENIC FLUID STORAGE FACILITY

(30) Priorité: 21.04.2022 FR 2203704
(43) Date de publication de la demande: 25.10.2023
(73) Titulaire: L'AIR LIQUIDE, SOCIETE ANONYME POUR L'ETUDE ET L'EXPLOITATION DES PROCEDES GEORGES CLAUDE, 75007 Paris (FR)
(72) Inventeur: PETITPAS, Guillaume, 78350 Jouy-en-Josas (FR); POURBAIX, Thomes, 78350 Jouy-en-Josas (FR)
(74) Mandataire: Air Liquide

(56) Documents cités:
- EP-B1- 1 360 084
- JP-A- S5 639 394
- JP-A- S58 214 096
- US-A- 4 671 700

## Description

L'invention concerne une installation de stockage de fluide cryogénique.

JPS58214096A divulgue une telle installation.

L'invention concerne plus particulièrement une installation de stockage de fluide cryogénique, notamment d'hydrogène liquéfié, comprenant un réservoir cryogénique enfoui directement sous terre avec une profondeur déterminée sous la surface du sol.

A l'heure actuelle, la vaste majorité des réservoirs dans les stations-services pour carburants fossiles liquides (essence/Diesel) sont enterrés, en contact direct avec la terre (c'est-à-dire en enfouissement direct).

Pour des carburants "alternatifs" (gaz naturel, hydrogène), les solutions restent à l'heure actuelle non enterrées ou logées dans des enceintes ou caveaux.

Il a été constaté que lors de l'enterrement direct d'un tel réservoir cryogénique dans le sol, dans certaines conditions, il peut se former une poche de froid entre le haut du réservoir et la surface du sol.

Cet effet est le résultat de la combinaison de l'existence de températures faibles autour du réservoir et de la présence d'un écran thermique entre le flux provenant de la terre et la surface du réservoir. Cette poche de froid représente potentiellement un risque pour les personnes et équipements au niveau du sol. En effet ceci peut générer une zone locale de givre, de glace, une détérioration d'équipement (fissuration d'ouvrages de génie civil due à l'apparition de contraintes provoquées par le gonflement différentiel du sol en cas de gel de ce dernier par exemple).

Un but de la présente invention est de pallier tout ou partie des inconvénients de l'art antérieur relevés ci-dessus.

A cette fin, l'installation selon l'invention, par ailleurs conforme à la définition générique qu'en donne le préambule ci-dessus, est essentiellement caractérisée en ce qu'il comporte au moins un élément de transfert thermique ayant une conductivité thermique supérieure à 10 W/m.K et enfoui dans le sol avec une première extrémité située entre le réservoir et la surface du sol et une seconde extrémité située dans une zone latérale autour du réservoir.

Par ailleurs, des modes de réalisation de l'invention peuvent comporter l'une ou plusieurs des caractéristiques suivantes :
- l'élément de transfert thermique comprend au moins l'un parmi : une poutre, une conduite fluidique de fluide caloporteur, une plaque, un bloc, un tissu,
- l'élément de transfert thermique est composé de l'un au moins des matériaux suivants : métal, alliage, aluminium, cuivre, acier (carbone et inox), zinc, laiton, nickel, fer, étain, bronze, carbone (en particulier fibre de carbone ou graphite ou graphène ou nanotubes de carbone),
- la seconde extrémité du au moins un élément de transfert est située à une profondeur dans le sol qui est supérieure à la profondeur de la première extrémité,
- la seconde extrémité du au moins un élément de transfert est située à une profondeur correspondant à la profondeur de la moitié de la hauteur du réservoir,
- le réservoir est enfoui à une profondeur comprise entre 50cm et 10m,
- le réservoir cryogénique est du type horizontal, c'est-à-dire de forme oblongue dont l'axe longitudinal est horizontal, l'installation comprenant au moins un élément de transfert réparti selon la direction longitudinale du réservoir.

L'invention peut concerner également tout dispositif ou procédé alternatif comprenant toute combinaison des caractéristiques ci-dessus ou ci-dessous dans le cadre des revendications.

D'autres particularités et avantages apparaîtront à la lecture de la description ci-après, faite en référence aux figures dans lesquelles :

### Brève description des figures

L'invention sera mieux comprise à la lecture de la description qui va suivre donnée uniquement à titre d'exemple et faite en se référant aux dessins annexés dans lesquels :

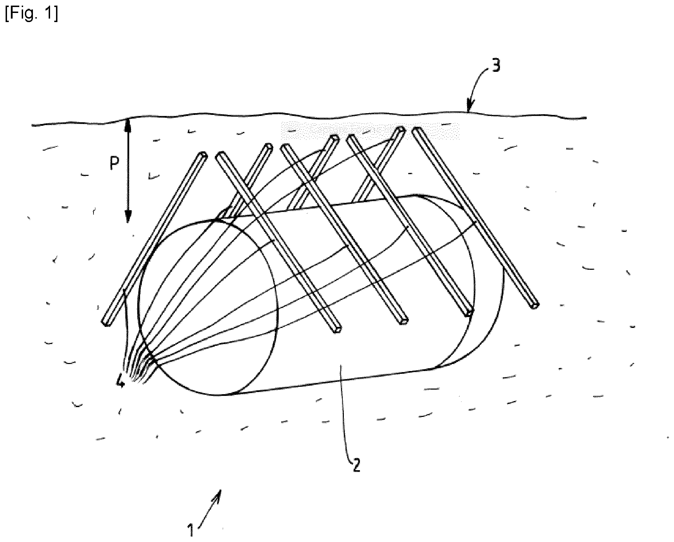

[Fig. 1] est une vue schématique et partielle illustrant un exemple de réalisation possible de de l'invention.

L'installation 1 de stockage de fluide cryogénique illustrée, notamment pour de l'hydrogène liquéfié, comprend un réservoir 2 cryogénique enterré. Ce réservoir de type cryogénique est configuré pour stocker un fluide cryogénique à une température de préférence inférieure à 173K. Ce réservoir 2 est par exemple un réservoir à double parois dont l'espace inter-parois est isolé thermiquement sous vide.

Le réservoir 2 est enfoui directement sous terre avec une profondeur P déterminée sous la surface du sol 3. Par « enfoui directement » on désigne un enterrement sans enceinte ou caveau séparant le réservoir de la terre (ou sable ou autre) dans lequel il est enfoui. C'est-à-dire que la surface extérieure du réservoir 2 peut être en contact direct avec le sol qui l'entoure (ou via une enveloppe, par exemple une enveloppe de protection souple).

Par exemple, le réservoir 2 est enfoui à une profondeur P comprise entre 50cm et 10m, par exemple une profondeur comprise entre 1 et 3m.

Selon une particularité avantageuse, l'installation 1 comprend au moins un élément 4 de transfert thermique ayant une conductivité thermique supérieure à 10W/m.K et enfoui dans le sol avec une première extrémité située entre l'extrémité supérieure du réservoir 2 et la surface du sol et une seconde extrémité située dans une zone distincte autour du réservoir 2. Par exemple, la seconde extrémité est située à une profondeur correspondant à la profondeur de la moitié de la hauteur du réservoir 2.

De préférence, la seconde extrémité de l'élément 4 de transfert est située à une profondeur dans le sol qui est supérieure à la profondeur de la première extrémité.

Cette configuration permet la dissipation du froid de la zone de froid qui peut se trouver entre le haut d'un réservoir enterré et le sol, en utilisant un élément composé d'un matériau à conductivité thermique supérieure par rapport à la conductivité d'un sol sec environnant.

Cette configuration diminue ou supprime les inconvénients précités en homogénéisant le champ de températures autour du réservoir 2 enterré.

Ceci permet un enfouissement direct avec ses avantages (empreinte au sol, coût, analyse de risque...).

L'élément 4 de transfert thermique peut être composé par exemple d'aluminium (conductivité thermique 200 W/m.K), cuivre (conductivité thermique 350 W/m.K), acier (conductivité thermique 50 W/m.K) ou autre notamment ayant une conductivité supérieure à celle de la terre sèche (conductivité thermique de l'ordre de 0.75 W/m.K).

Dans l'exemple illustré, l'élément de transfert thermique comprend plusieurs poutres 4. Plus précisément, l'installation 1 comprend un ensemble de poutres 4 en matériau à forte conductivité thermique (aluminium, cuivre...) enfouies dans la partie supérieure du réservoir.

Le réservoir 2 cryogénique peut être du type horizontal, c'est-à-dire de forme cylindrique à section circulaire et dont l'axe longitudinal est horizontal.

Les poutres 4 sont réparties le long de l'axe longitudinal du réservoir 2. Comme illustré, les poutres 4 peuvent être disposées perpendiculairement à une tangente à la surface du réservoir 2. Dans un tel agencement, les poutres 4 peuvent être perpendiculaires aux lignes de température de la zone froide. Par exemple, ces poutres 4 peuvent être espacées longitudinalement de 5cm à 200cm. Leur espacement est en particulier prévu pour permettre de laisser passer des écoulements d'eau. La dissipation thermique se fait alors par simple conduction thermique: le froid de la poche supérieure du sol est ainsi évacué vers les zones chaudes, sur les côtés autour du réservoir 2.

Ces poutres ou barres 4 peuvent avoir une section pleine ou creuse, carrée ou circulaire ou autre. Ces poutres 4 peuvent être installées directement en contact avec le sol pour privilégier le contact thermique, pendant le remplissage d'une fosse, par exemple avec du sable. La longueur et/ou la section et le nombre des poutres 4 peuvent être dimensionnés en fonction des besoins.

De même, tout ou partie de ces poutres 4 peuvent comporter des ramifications pour démultiplier la surface d'échange entre le sol et l'élément conducteur.

Bien entendu, l'invention n'est pas limitée à cet exemple. Ainsi, la ou les poutres 4 peuvent être remplacées ou suppléées par d'autres éléments de transfert thermique, par exemple ; un circuit de fluide caloporteur, plaque(s) pleine(s) ou ajourée(s), bloc(s), un tissu (s)...

Par exemple, deux blocs (ou "nappes") en matériau conducteur thermique peuvent être disposés de la même façon que les deux rangées de poutres 4 illustrées (un bloc conducteur de chaque côté du réservoir 2). Ces blocs peuvent être percés de trous pour éviter les problématiques d'accumulation d'eau. Un simple tissu suffisamment long pourrait également être considéré.

Dans cette description détaillée ci-dessus, les réalisations mentionnées sont des exemples. Bien que la description se réfère à un ou plusieurs modes de réalisation, cela ne signifie pas que les caractéristiques s'appliquent seulement à un seul mode de réalisation. De simples caractéristiques de différents modes de réalisation peuvent également être combinées et/ou interchangées pour fournir d'autres réalisations.

## Revendications

1. Installation de stockage de fluide cryogénique, notamment d'hydrogène liquéfié, comprenant un réservoir (2) cryogénique enfoui directement sous terre avec une profondeur (P) déterminée sous la surface du sol (3), **caractérisée en ce qu'**il comporte au moins un élément (4) de transfert thermique ayant une conductivité thermique supérieure à 10 W/m.K et enfoui dans le sol avec une première extrémité située entre le réservoir (2) et la surface du sol et une seconde extrémité située dans une zone latérale autour du réservoir (2).

2. Installation selon la revendication 1, **caractérisée en ce que** l'élément (4) de transfert thermique comprend au moins l'un parmi : une poutre (4), une conduite fluidique de fluide caloporteur, une plaque, un bloc, un tissu.

3. Installation selon la revendication 1 ou 2, **caractérisée en ce que** l'élément (4) de transfert thermique est composé de l'un au moins des matériaux suivants : métal, alliage, aluminium, cuivre, acier (carbone et inox), zinc, laiton, nickel, fer, étain, bronze, carbone (en particulier fibre de carbone ou graphite ou graphène ou nanotubes de carbone).

4. Installation selon l'une quelconque des revendications 1 à 3, **caractérisée en ce que** la seconde extrémité du au moins un élément (4) de transfert est située à une profondeur dans le sol qui est supérieure à la profondeur de la première extrémité.

5. Installation selon l'une quelconque des revendications 1 à 3, **caractérisée en ce que** la seconde extrémité du au moins un élément (4) de transfert est située à une profondeur correspondant à la profondeur de la moitié de la hauteur du réservoir (2).

6. Installation selon l'une quelconque des revendications 1 à 5, **caractérisée en ce que** le réservoir est enfoui à une profondeur (P) comprise entre 50cm et 10m.

7. Installation selon l'une quelconque des revendications 1 à 6, **caractérisée en ce que** le réservoir (2) cryogénique est du type horizontal, c'est-à-dire de forme oblongue dont l'axe longitudinal est horizontal, l'installation comprenant au moins un élément (4) de transfert réparti selon la direction longitudinale du réservoir (2)

## Patentansprüche

1. Kryogene Fluidspeicheranlage, insbesondere für flüssigen Wasserstoff, beinhaltend einen Kryotank (2), der mit einer bestimmten Tiefe (P) unter der Oberfläche des Bodens (3) direkt unter der Erde vergraben ist, **dadurch gekennzeichnet, dass** er mindestens ein Wärmeübertragungselement (4) aufweist, das eine Wärmeleitfähigkeit größer als 10 W/m.K aufweist und im Boden vergraben ist, wobei sich ein erstes Ende zwischen dem Tank (2) und der Oberfläche des Bodens befindet und sich ein zweites Ende in einem Seitenbereich rund um den Tank (2) befindet.

2. Anlage nach Anspruch 1, **dadurch gekennzeichnet, dass** das Wärmeübertragungselement (4) mindestens eines von Folgendem beinhaltet: einen Balken (4), eine Wärmeträgerfluidleitung, eine Platte, einen Block, ein Gewebe.

3. Anlage nach Anspruch 1 oder 2, **dadurch gekennzeichnet, dass** das Wärmeübertragungselement (4) aus mindestens einem der folgenden Materialien besteht: Metall, Legierung, Aluminium, Kupfer, Stahl (Kohlenstoff- und Edelstahl), Zink, Messing, Nickel, Eisen, Zinn, Bronze, Kohlenstoff (insbesondere Kohlenstofffaser oder Graphit oder Graphen oder Kohlenstoffnanoröhren).

4. Anlage nach einem beliebigen der Ansprüche 1 bis 3, **dadurch gekennzeichnet, dass** sich das zweite Ende des mindestens einen Übertragungselements (4) in einer Tiefe im Boden befindet, die größer als die Tiefe des ersten Endes ist.

5. Anlage nach einem beliebigen der Ansprüche 1 bis 3, **dadurch gekennzeichnet, dass** sich das zweite Ende des mindestens einen Übertragungselements (4) in einer Tiefe befindet, die der Tiefe der Hälfte der Höhe des Tanks (2) entspricht.

6. Anlage nach einem beliebigen der Ansprüche 1 bis 5, **dadurch gekennzeichnet, dass** der Tank in einer Tiefe (P) zwischen 50 cm und 10 m vergraben ist.

7. Anlage nach einem beliebigen der Ansprüche 1 bis 6, **dadurch gekennzeichnet, dass** der Kryotank (2) vom horizontalen Typ ist, das heißt eine längliche Form aufweist, deren Längsachse horizontal ist, wobei die Anlage mindestens ein Übertragungselement (4) beinhaltet, das gemäß der Längsrichtung des Tanks (2) verteilt ist.

## Claims

1. Installation for storing cryogenic fluid, in particular liquefied hydrogen, comprising a cryogenic tank (2) buried directly underground with a predetermined depth (P) below the surface of the ground (3), **characterized in that** it comprises at least one heat transfer element (4) having a thermal conductivity greater than 10 W/m.K and buried in the ground with a first end situated between the tank (2) and the surface of the ground and a second end situated in a lateral zone around the tank (2).

2. Installation according to Claim 1, **characterized in that** the heat transfer element (4) comprises at least one from among: a beam (4), a fluid pipe for heat transfer fluid, a plate, a block, a fabric.

3. Installation according to Claim 1 or 2, **characterized in that** the heat transfer element (4) is composed of at least one of the following materials: metal, alloy, aluminium, copper, steel (carbon and stainless steel), zinc, brass, nickel, iron, tin, bronze, carbon (in particular carbon or graphite or graphene fibre or carbon nanotubes).

4. Installation according to any one of Claims 1 to 3, **characterized in that** the second end of the at least one transfer element (4) is situated at a depth in the ground which is greater than the depth of the first end.

5. Installation according to any one of Claims 1 to 3, **characterized in that** the second end of the at least one transfer element (4) is situated at a depth corresponding to the depth of half the height of the tank (2).

6. Installation according to any one of Claims 1 to 5, **characterized in that** the tank is buried to a depth (P) of between 50 cm and 10 m.

7. Installation according to any one of Claims 1 to 6, **characterized in that** the cryogenic tank (2) is of the horizontal type, that is to say of oblong shape in which the longitudinal axis is horizontal, the installation comprising at least one transfer element (4) distributed along the longitudinal direction of the tank (2).
